# EUROPÄISCHE PATENTANMELDUNG

(11) **EP 2 249 011 A2**
(43) Veröffentlichungstag der Anmeldung: **10.11.2010**
(21) Anmeldenummer: 10155567.0
(22) Anmeldetag: 05.03.2010
(51) Int. Cl.: F02D 41/00, F02D 41/06, F02D 41/30

(54) **Verfahren und Vorrichtung zur Steuerung des Startvorganges in einem Verbrennungsmotor**

(30) Priorität: 30.04.2009 DE 102009002759
(71) Anmelder: Ford Global Technologies, LLC, Dearborn, MI 48126 (US)
(72) Erfinder: Lorenz, Thomas, 50737 Köln (DE); Louven, Georg, 56567 Neuwied (DE); Ruhland, Helmut, 52249 Eschweiler (DE); Springer, Klaus Moritz, 58095 Hagen (DE)
(74) Vertreter: Drömer, Hans-Carsten

(57) **Zusammenfassung**

Die vorliegende Erfindung betrifft ein Verfahren und eine Vorrichtung zur Steuerung des Startvorganges in einem Verbrennungsmotor, der Kraftstoff wie Benzin-Ethanolmischung oder reines Ethanol verwendet. Bei einem Verfahren zur Steuerung des Startvorganges erfolgt zumindest zeitweise eine Kraftstoffeinspritzung in bereits komprimierte Luft unter Verwendung eines mageren Luft-Kraftstoff-Gemisches. Bevorzugt wird eine Einfacheinspritzung bei einem Kurbelwellenwinkel im Bereich von 0° BTDC bis 15° BTDC.

## Beschreibung

Die vorliegende Erfindung betrifft ein Verfahren und eine Vorrichtung zur Steuerung des Startvorganges in einem Verbrennungsmotor. Die Erfindung ist vorteilhaft in Verbindung mit Ottomotoren mit Direkteinspritzung einsetzbar, welche einen Schichtladungsbetrieb ermöglichen.

Die Direkteinspritzung erlaubt bei Ottomotoren die Einbringung des Kraftstoffes in die durch die Kompression erhitzte Luft. Damit ergeben sich günstigere Bedingungen für die Verdampfung von Kraftstoffen, insbesondere Alkohol-Kraftstoffen. Um die Startfähigkeit von Verbrennungsmotoren bei niedrigen Temperaturen sicherzustellen, wird bei herkömmlichen Kaltstartstrategien in Verbindung mit direkteinspritzenden Otto-Motoren bzw. benzinbetriebenen Motoren dennoch in der Regel eine übermäßige Kraftstoffzufuhr eingesetzt. Insbesondere bei der Verwendung von Ethanol/Benzinmischungen ist jedoch eine beträchtliche Steigerung dieser übermäßigen Kraftstoffzufuhr erforderlich. Diese übermäßige Kraftstoffzufuhr kann zu Problemen aufgrund der Abnahme des Einspritzdruckes führen. Eine Aufheizung des überschüssigen Kraftstoffes führt zu einer weiteren Abnahme der für die Kraftstoffverdampfung verfügbaren Enthalpie. Die Folge ist eine weitere Abnahme der gesamten Kraftstoffmenge, die verdampft werden kann.

Im Falle sehr niedriger Temperaturen kann die hohe übermäßige Kraftstoffzufuhr somit zu Problemen in der Kraftstoffversorgung führen und etwa bei Verwendung von Alkoholen z. B. Ethanol bzw. Ethanol/Benzinmischungen aufgrund der geringen Verdampfung bei niedrigen Temperaturen Startschwierigkeiten hervorrufen.

Zur Vermeidung dieser Probleme werden bei herkömmlichen Startstrategien mitunter spezielle Heizvorrichtungen oder duale Kraftstoffversorgungssysteme eingesetzt, um einen Kaltstart auch bei Verwendung von Ethanol/Benzinmischungen zu ermöglichen.

Bei einer Einspritzstrategie für direkteinspritzende (kurz DI) Ottomotoren, die sich bei Verwendung konventioneller Benzin-Kraftstoffe bewährt hat, wird beim Startvorgang eine sog. "Split"-Einspritzung eingesetzt, bei der nach Aufbau eines vorgegebenen Drucks im Kraftstoffverteilerrohr die zum Start benötigte Kraftstoffmenge in zwei (oder mehr) Einspritzvorgängen abgegeben wird, typischerweise mit einem Beginn der ersten Injektion (SOI 1) im Ansaugtakt, z. B. bei ca. 250° Kurbelwellenwinkel (CA) vor dem oberen Totpunkt (BTDC) und einem Ende der zweiten Injektion (EOI 2) im Kompressionstakt, z. B. bei ca. 60° CA BTDC, wobei das Split-Verhältnis (erste zu zweite Injektion) und die Zündvorverstellung im Hinblick auf eine kurze Startdauer ausgelegt werden. Diese Strategie erfordert jedoch bei ethanolhaltigen Kraftstoffen und tiefen Temperaturen eine Erhöhung der Kraftstoffzufuhr, die das Einspritzsystem an seine Auslegungsgrenzen führt.

Vor dem obigen Hintergrund ist es eine Aufgabe der vorliegenden Erfindung, ein Verfahren und eine Vorrichtung zur Steuerung des Startvorganges in einem Verbrennungsmotor bereitzustellen, bei welchen Probleme bei der Kraftstoffversorgung bei Verwendung von ethanolhaltigen Kraftstoffen bzw. allgemein niedrigflüchtigen Kraftstoffen und bei tiefen Starttemperaturen vermieden werden.

Diese Aufgabe wird durch ein Verfahren gemäß den Merkmalen des unabhängigen Patentanspruchs 1 bzw. eine Vorrichtung gemäß den Merkmalen des unabhängigen Patentanspruchs 6 gelöst.

Bei dem erfindungsgemäßen Verfahren wird eine Kraftstoffversorgung beim Startvorgang mit einem magerem Luft-Kraftstoff-Gemisch durchgeführt. Die Realisierung des Startvorganges unter Verwendung eines mageren Luft-Kraftstoff-Gemisches führt zu einer wesentlichen Reduzierung des erforderlichen Kraftstoffflusses. Infolgedessen können Probleme bei der Kraftstoffversorgung vermieden werden.

Im Rahmen einer bevorzugten Ausgestaltung der Erfindung ist vorgesehen, eine zeitliche Verschiebung der Einspritzung während des Startvorganges zur Erzielung eines Schichtladebetriebes vorzunehmen. Bei einer zu einem späten Zeitpunkt erfolgenden Einfacheinspritzung wird der Kraftstoff in die bereits komprimierte Luft eingespritzt. Infolgedessen ist die Lufttemperatur erhöht, was zu einer Verbesserung der Kraftstoffverdampfung führt, da der zerstäubte Kraftstoff direkt mit der aufgewärmten Luft in Kontakt kommt und nicht erst von den Zylinderwänden verdampft werden muß. Die Einspritzung in die bereits komprimierte Luft hat hierbei den Vorteil, dass zusätzliche Heizvorrichtungen und/oder duale Kraftstoffversorgungssysteme entbehrlich sind. Da der eingespritzte Kraftstoff verdampft werden muß, ist die Kraftstoffmenge abhängig von der verfügbaren bzw. durch die Kompression bereitstellbaren Temperaturerhöhung bzw. Wärmeenergie. Voraussetzung für einen derartigen Startvorgang ist jedoch, dass der Verbrennungsmotor für einen Schichtladungsbetrieb geeignet ist, d. h. dass Einrichtungen zu einer inhomogenen Gemischbildung vorhanden sind, bei denen im Bereich der Zündkerze eine Gemischanreicherung vorhanden ist.

Durch die Erfindung werden Probleme vermieden, die bei herkömmlichen Kaltstartstrategien (z. B. bei Temperaturen unterhalb von 0 °C) mit der übermäßigen Kraftstoffzufuhr insbesondere in Verbindung mit Ethanolmischungen einhergehen. Vielmehr führt die erfindungsgemäße Startstrategie unter Verwendung eines mageren Luft-Kraftstoff-Gemisches (z. B. einem Sollwert für den globalen Lambda-Wert von wenigstens 3) zu einer Steigerung der Kraftstoffverdampfung und zu einer Abnahme der Wandbenetzung.

Ein weiterer Vorteil der Verwendung eines mageren Luft-Kraftstoff-Gemisches beim Startvorgang besteht darin, dass je nach verwendetem Kraftstoff eine signifikante Reduzierung der HC-Emissionen während des Kaltstarts erreicht werden kann.

Gemäß einer bevorzugten Ausführungsform erfolgt (insbesondere zu einem späten Zeitpunkt) eine Einfacheinspritzung bzw. ein einziger Einspritzvorgang. Vorzugsweise erfolgt diese Einfacheinspritzung bei einem Kurbelwellenwinkel im Bereich von 0° BTDC bis 15° BTDC (= vor dem oberen Totpunkt), insbesondere bei einem Kurbelwellenwinkel von 0° BTDC. Dies führt zu einer weiteren Verbesserung, da die Verdampfung von Kraftstoffanteilen, die bereits an den Wänden der Verbrennungskammer zugeströmt sind, entbehrlich wird. Der späte Einspritzvorgang ermöglicht eine wesentlich fettere Mischung bei Funkenzündung. Auch hier wird ausgenutzt, dass der Verbrennungsmotor für einen Schichtladungsbetrieb geeignet ist, so dass die Zündung von zu einem späten Zeitpunkt eingespritztem Kraftstoff ermöglicht wird.

Die Erfindung betrifft ferner eine Vorrichtung zur Steuerung des Startvorganges in einem Verbrennungsmotor, welche dahingehend ausgebildet ist, ein Verfahren gemäß der Erfindung auszuführen. Zu bevorzugten Ausgestaltungen und Vorteilen der Vorrichtung wird auf die vorstehenden Ausführungen im Zusammenhang mit dem erfindungsgemäßen Verfahren verwiesen.

Weitere Ausgestaltungen sind der Figurenbeschreibung sowie den Unteransprüchen zu entnehmen.

Die Erfindung wird nachfolgend anhand eines bevorzugten Ausführungsbeispiels und unter Bezugnahme auf die beigefügten Abbildungen näher erläutert.

Es zeigen:
- Figur 1: einen Verlauf des Lambda-Wertes des verdampften Kraftstoffanteils und der Wandbenetzung in Abhängigkeit vom globalen Lambda-Wert für eine herkömmliche und eine erfindungsgemäße Einspritzstrategie;
- Figur 2: ein Diagramm des Verlaufs des minimalen erreichbaren Lambda-Wertes für den verdampften Kraftstoffanteil in Abhängigkeit der Steuerzeit für das Schließen des Einlaßventils; und
- Figur 3: ein Diagramm, in welchem der sog. Startfaktor in Abhängigkeit von der Starttemperatur für herkömmliche Kaltstartstrategien für eine Kraftstoffmischung von 85% Ethanol mit 15% Benzin (E85 Kraftstoff) aufgetragen ist.

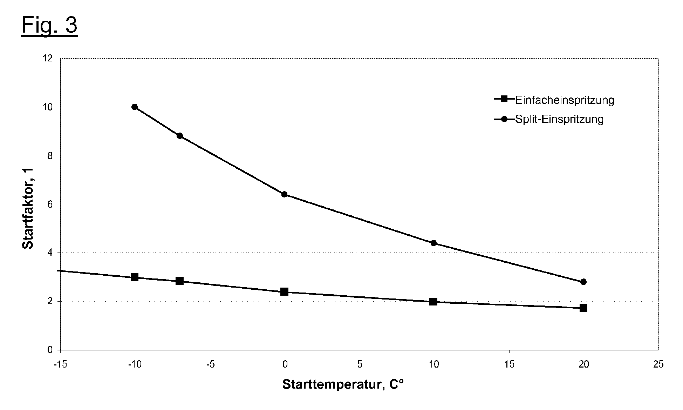

Zunächst seien anhand Fig. 3 die Probleme der eingangs erwähnten bekannten "Split"-Einspritzstrategie beim Start eines Verbrennungsmotors und niedrigen Starttemperaturen erläutert. Die Graphen in Fig. 3 zeigen den sog. Startfaktor, d. h. die zur Erzielung einer ausreichenden Kraftstoffdampfmenge erforderliche Überhöhung der Kraftstoffeinspritzung gegenüber dem eigentlich unter Verbrennungsaspekten erforderlichen Kraftstoff, und dies abhängig von der Starttemperatur.

Der obere Graph in Fig. 3 zeigt den Startfaktor bei einer typischen Split-Startstrategie mit einem Beginn der ersten Injektion (SOI 1) bei 250° Kurbelwellenwinkel (CA) vor dem oberen Totpunkt (BTDC) und einem Ende der zweiten Injektion (EOI 2) bei 60° CA BTDC und einem Split-Verhältnis (erste zu zweite Injektion) von 40% zu 60% und einer Zündvorverstellung von 5° bei der Verwendung von E85 Kraftstoff.

Bei einer derartigen Split-Strategie ergeben sich bei Verwendung von Ethanolhaltigem Kraftstoff für den Start folgende Einstelldaten:

| | | | | | |
|---|---|---|---|---|---|
| Starttemperatur | °C | -7 | 0 | 10 | 20 |
| Injektordruck bei Auslösung | 10⁵ Pa | 140 | 140 | 100 | 60 |
| Startfaktor | - | 8,8 | 6,4 | 4,4 | 2,8 |

Schon bei -7 °C stoßen die erforderlichen Kraftstoffeinspritzparameter an die Grenzen herkömmlicher Kraftstoffeinspritzpumpen, was einen Druckabfall in der Kraftstoffzuführungsleitung nach den ersten Injektionen zur Folge haben kann, der die Gefahr eines (Wieder-)Ausgehens des Motors mit sich bringt und dem letztlich durch weitere Erhöhung der Kraftstoffmenge entgegengewirkt werden muß.

Demgegenüber zeigt der untere Graph den Startfaktor, der bei einer erfindungsgemäßen Strategie mit einer Einfacheinspritzung (mit Schichtladebetrieb) zu erwarten ist. Der jeweils erforderliche Startfaktor übersteigt auch bei niedrigen Temperaturen nicht den Wert 4,0, sondern erreicht maximal ca. 3,4.

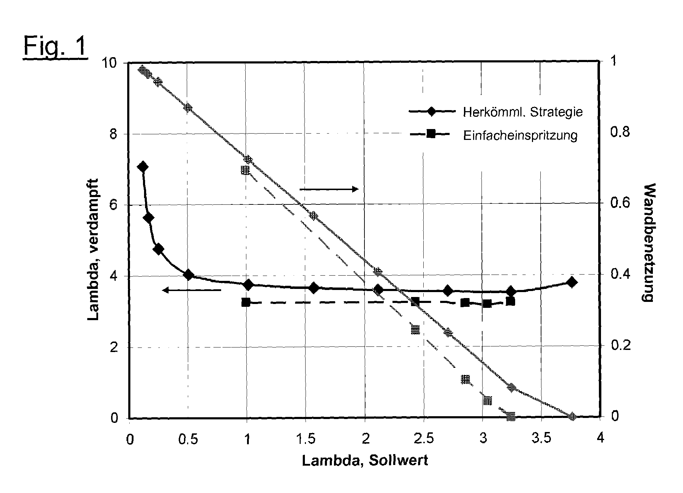

Fig. 1 zeigt ein anhand einer Simulationen des Verdampfungswärmehaushaltes ermitteltes Diagramm, in welchem der Verlauf des Lambda-Wertes des verdampften Kraftstoffanteils und der Wandbenetzung in Abhängigkeit vom globalen Lambda-Wert bei einer Startdrehzahl von 200 Umdrehungen pro Minute (= rpm) und einer Starttemperatur von -10°C gezeigt. Dargestellt sind die Werte, die sich bei einer herkömmlichen Split-Strategie - wie vorstehend erläutert - im Vergleich zu einer erfindungsgemäßen Einzeleinspritzstrategie ergeben. Einzeleinspritzung bedeutet in diesem Zusammenhang, dass lediglich ein Einspritzvorgang, vorzugsweise bei einem Kurbelwellenwinkel von ca. 0° BTDC, stattfindet.

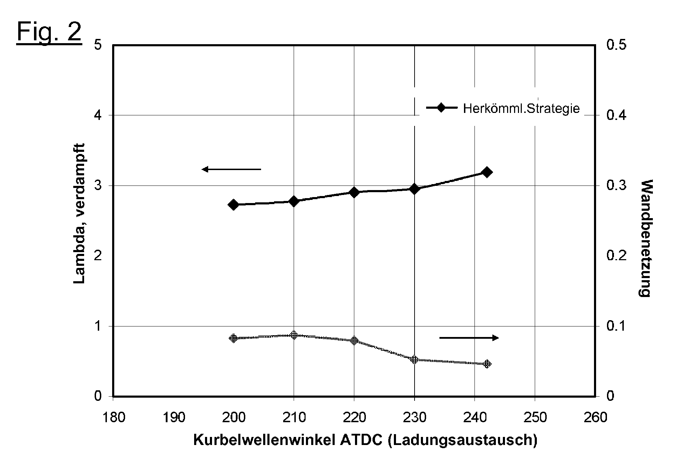

Der erste Punkt der Kurve in Fig. 2 bei einem Lambda-Wert von 0,125 entspricht einem Kraftstoffversorgungsfaktor von 8 (gemäß der herkömmlichen Split-Strategie). Aufgrund der Energieerhaltung führen fettere Luft-Kraftstoff-Gemische mit einem Lambda-Wert von mehr als 3,2 nicht mehr zu einer Erhöhung der für die Verbrennung zur Verfügung stehenden Kraftstoffmenge, wobei jedoch die Menge an flüssigem Kraftstoff in der Verbrennungskammer wesentlich erhöht wird.

Geht man von einem erhöhten Energiebedarf für die Verdampfung des Kraftstoffes von den Wänden der Verbrennungskammer aus, so sollte eine späte einzelne Einspritzung günstig sein, sofern die Erzeugung der Mischung dies erlaubt.

Eine für die vorliegende Erfindung wesentliche Erkenntnis besteht somit darin, dass aufgrund der begrenzten zur Verfügung stehenden Kompressionswärme die hierdurch verdampfbare Kraftstoffmenge begrenzt ist, so dass eine weitere Überhöhung der Kraftstoffzumessung letztlich kontraproduktiv ist.

Fig. 2 zeigt ein Diagramm, in dem der Verlauf des minimalen erreichbaren Lambda-Wertes für den verdampften Kraftstoffanteil in Abhängigkeit von dem Kurbelwellenwinkel beim Schließen des Ansaugventils (in Grad ATDC = "After Top Dead Centre") für eine Startdrehzahl von 200 Umdrehungen pro Minute (= rpm) und bei einer Starttemperatur von -10°C aufgetragen ist, wobei die Wandbenetzung auf 10% begrenzt ist. Der Anstieg des effektiven Kompressionsverhältnisses (CR) bei einem früheren Schließen des Ansaugventils führt zu einer geringen Verbesserung im minimalen Lambda-Wert während des Startvorganges.

## Patentansprüche

1. Verfahren zur Steuerung des Startvorganges in einem Verbrennungsmotor,
**dadurch gekennzeichnet, dass**
während des Startvorganges des Verbrennungsmotors zumindest zeitweise eine Kraftstoffeinspritzung unter Verwendung eines mageren Luft-Kraftstoff-Gemisches erfolgt.

2. Verfahren nach Anspruch 1,
**dadurch gekennzeichnet, dass**
bei dieser Kraftstoffeinspritzung zumindest zeitweise ein Sollwert für den globalen Lambda-Wert eingestellt wird.

3. Verfahren nach Anspruch 1 oder 2,
**dadurch gekennzeichnet, dass**
bei dieser Kraftstoffeinspritzung eine Einfacheinspritzung von Kraftstoff in bereits komprimierte Luft erfolgt.

4. Verfahren nach Anspruch 3,
**dadurch gekennzeichnet, dass**
diese Einfacheinspritzung bei einem Kurbelwellenwinkel im Bereich von 0° BTDC bis 15° BTDC (= vor dem oberen Totpunkt), insbesondere bei einem Kurbelwellenwinkel von 0° BTDC, erfolgt.

5. Verfahren nach einem der vorhergehenden Ansprüche,
**dadurch gekennzeichnet, dass**
als Kraftstoff eine Benzin-Ethanolmischung oder reines Ethanol (bzw. Ethanol / Wasser) oder andere niedrigflüchtige Kraftstoffe verwendet wird.

6. Vorrichtung zur Steuerung des Startvorganges in einem Verbrennungsmotor,
**dadurch gekennzeichnet, dass**
die Vorrichtung dahingehend ausgebildet ist, ein Verfahren nach einem der vorhergehenden Ansprüche auszuführen.
